# EUROPEAN PATENT SPECIFICATION

(11) **EP 3 202 731 B1**
(45) Date of publication and mention of the grant of the patent: **27.12.2023**
(21) Application number: 15846564.1
(22) Date of filing: 30.09.2015
(51) Int. Cl.: C03C 27/12, B32B 17/10, B32B 27/00

(54) **INTERLAYER FILM FOR LAMINATED GLASS, AND LAMINATED GLASS**
ZWISCHENSCHICHTFOLIE FÜR VERBUNDGLAS SOWIE VERBUNDGLAS
FILM INTERCALAIRE POUR VERRE FEUILLETÉ ET VERRE FEUILLETÉ

(30) Priority: 30.09.2014 JP 2014202344
(43) Date of publication of application: 09.08.2017
(73) Proprietor: Sekisui Chemical Co., Ltd., Osaka-shi, Osaka 530-0047 (JP)
(72) Inventor: HIROTA Etsurou, Koka-shi Shiga 528-8585 (JP); KAWATE Hiroshi, Koka-shi Shiga 528-8585 (JP); MORI Michiko, Koka-shi Shiga 528-8585 (JP); KIDO Koji, Koka-shi Shiga 528-8585 (JP)
(74) Representative: Cabinet Beau de Loménie
(86) International application number: PCT/JP2015/077707
(87) International publication number: WO 2016/052606

(56) References cited:
- EP-A1- 2 159 201
- EP-A1- 3 127 880
- WO-A1-01/43963
- WO-A1-92/03285
- WO-A1-2012/133370
- JP-A- 2000 290 046
- JP-A- 2010 089 365

## Description

### TECHNICAL FIELD

The present invention relates to an interlayer film for laminated glass which has a laminated structure including a plastic layer with a high Young's modulus and a resin layer, which is excellent in impact resistance and penetration resistance, which has high adhesiveness between the plastic layer and the resin layer, and which prevents blocking of the resin layer. The present invention also relates to a laminated glass including the interlayer film for laminated glass.

### BACKGROUND ART

Laminated glass is less likely to scatter even when fractured by external impact and can be safely used. Due to this advantage, laminated glass has been widely used in windshields of vehicles and windowpanes of aircraft, buildings, or the like. A known example of laminated glass is a type of laminated glass including at least a pair of glass plates integrated through, for example, an interlayer film for laminated glass which contains a polyvinyl acetal resin such as polyvinyl butyral resin and a plasticizer.

Laminated glass is desired to be hardly broken by external impact and have high penetration resistance. With an aim of producing a laminated glass having better impact resistance and penetration resistance, an interlayer film for laminated glass having a multilayer structure including a resin layer that contains an adhesive resin such as a polyvinyl acetal resin and a plastic layer with a high Young's modulus such as a layer of polyethylene terephthalate has been proposed.

As such an interlayer film for laminated glass, Patent Literature 1, for example, discloses an interlayer film including a resin layer (A) containing two transparent adhesive resins and a resin layer (B) including two resin layers (a) and polyethylene terephthalate positioned between the resin layers (a). The resin layer (B) containing polyethylene terephthalate imparts excellent impact resistance, penetration resistance, and flame resistance to the interlayer film.

Patent Literature 2, for example, discloses an interlayer film for laminated glass including a laminate of a plasticized polyvinyl acetal resin film and a polyester film, and teaches that use of a highly elastic polyester film in combination improves the mechanical strength of the resulting interlayer film and that laminated glass including the interlayer film has significantly improved penetration resistance.

Patent Literature 3, for example, discloses an interlayer film including two or more types of layers having different Young's moduli stacked on one another, and teaches that an interlayer film having a triple layer structure including an interlayer film with a high Young's modulus sandwiched between interlayer films each with a low Young's modulus has better impact resistance and peeling resistance. Patent Literature 3 includes an example disclosing an interlayer film in which two types of layers A and B are stacked to form a A/B/A structure.

### CITATION LIST

### - Patent Literature

Patent Literature 1: JP 2008-303084 A
Patent Literature 2: JP 2001-106556 A
Patent Literature 3: JP 2003-192402 A

EP 3 127 880 A1, which is a prior art under Art. 54(3) EPC, and WO 01/43963 A1, EP 2 159 201 A1, and WO 92/03285 A1 each show an interlayer film according to the preamble of claim 1.

### SUMMARY OF INVENTION

### - Technical Problem

An interlayer film for laminated glass having a multilayer structure including a plastic layer with a high Young's modulus and a resin layer that contains an adhesive resin such as a polyvinyl acetal resin has a problem that the plastic layer is peeled from the resin layer due to poor adhesiveness between the plastic layer and the resin layer.

To improve the adhesiveness between the plastic layer and the resin layer, the roughness of the surface of the resin layer on the side to be in contact with the plastic layer may be reduced. The resin layer is commonly stored in the form of a roll before being stacked on the plastic layer. When the roughness of the surface of the resin layer is reduced, however, the resin layer in the form of a roll has a problem of blocking in which resin layers in the roll adheres to each other so that the resin layer is hardly rewound.

The present invention aims to provide, in consideration of the state of the art, an interlayer film for laminated glass which has a laminated structure including a plastic layer with a high Young's modulus and a resin layer, which is excellent in impact resistance and penetration resistance, which has high adhesiveness between the plastic layer and the resin layer, and which prevents blocking of the resin layers. The present invention also aims to provide a laminated glass including the interlayer film for laminated glass.

### - Solution to problem

The present invention is defined in the claims and specifically described in the following.

As a result of intensive studies, in relation to an interlayer film for laminated glass having a multilayer structure including a plastic layer with a Young's modulus of 1 GPa or more and a first resin layer on a first surface of the plastic layer, the present inventors focused on the glossiness of the surface of the first resin layer on the side to be in contact with the plastic layer. The present inventors found out that control of the glossiness within a specific range enables compatible achievement of high adhesiveness between the plastic layer and the resin layer and smooth rewinding of the resin layer in the form of a roll with less blocking thereof, thereby completing the present invention.

The interlayer film for laminated glass of the present invention has a multilayer structure including a plastic layer with a Young's modulus of 1 GPa or more and a first resin layer. Such a multilayer structure imparts excellent impact resistance and penetration resistance.

The plastic layer has a Young's modulus of 1 GPa or more. When the plastic layer has a Young's modulus of 1 GPa or more, an interlayer film for laminated glass to be obtained has better impact resistance and penetration resistance. The Young's modulus of the plastic layer is preferably 1.5 GPa or more, more preferably 2 GPa or more. The upper limit of the Young ' s modulus of the plastic layer is not particularly limited, and is practically 10 GPa.

The Young's modulus of the plastic layer as used herein means the value indicated by the slope of the straight line part of a stress-strain curve that is drawn in a tensile test in conformity with JIS K7127 at 23°C.

The plastic layer contains polyethylene terephthalate (PET). Polyethylene terephthalate (PET) is contained in the plastic layer and like polybutylene terephthalate (PBT), it is easily formable and can impart better impact resistance and penetration resistance.

The plastic layer preferably contains an ultraviolet shielding agent.

The ultraviolet shielding agent is not particularly limited, and examples thereof include metallic ultraviolet shielding agents, metal oxide ultraviolet shielding agents, benzotriazole ultraviolet shielding agents (benzotriazole compounds), benzophenone ultraviolet shielding agents (benzophenone compounds), triazine ultraviolet shielding agents (triazine compounds), malonic acid ester ultraviolet shielding agents (malonic acid ester compounds), oxanilide ultraviolet shielding agents (oxanilide compounds), and benzoate ultraviolet shielding agents (benzoate compounds).

The plastic layer preferably contains an antioxidant.

The antioxidant is not particularly limited, and examples thereof include 2,2-bis[[(3-(3,5-di-tert-butyl -4-hydroxyphenyl)propionyl]oxy]methyl]propane-1,3-diol, 1,3-bis[3-(3,5-di-tert-butyl-4-hydroxyphenyl)propionate], 4,4'-thiobis(6-tert-butyl-3-methylphenol), 4,4'-dimethyl -6,6'-di(tert-butyl)[2,2'-methylenebis(phenol)], 2,6-di-t-butyl-p-cresol, and 4,4'-butylidenebis-(6-t-butyl -3-methylphenol).

The plastic layer may optionally further contain additives such as a light stabilizer, a flame retardant, an antistatic agent, a pigment, a dye, an adhesion modifier, a damp proofing agent, and a fluorescent brightener.

As for the thickness of the plastic layer, the lower limit is preferably 5 µm and the upper limit is preferably 300 µm. When the thickness of the plastic layer is within the above range, excellent impact resistance and penetration resistance can be achieved. The lower limit of the thickness of the plastic layer is more preferably 30 µm and the upper limit thereof is more preferably 150 µm.

As for the glossiness of the surface of the first resin layer on the side to be in contact with the plastic layer, the lower limit is 10 and the upper limit is 40. When the glossiness is within the above range, the first resin layer can exhibit high adhesiveness to the plastic layer and blocking can be prevented. When the glossiness is less than 10, the adhesiveness to the plastic layer is poor. When the glossiness is more than 40, blocking cannot be prevented. The lower limit of the glossiness is preferably 15, more preferably 18, and the upper limit thereof is preferably 35, more preferably 30.

The glossiness as used herein means the 75° specular glossiness measured in conformity with the measurement method 2 described in JIS Z 8741:1997 using a precision gloss meter (e.g., "GM-26PRO" produced by Murakami Color Research Laboratory Co., Ltd.). Depending on the surface shape of the first resin layer on the side to be in contact with the plastic layer, the glossiness may change in accordance with the irradiation direction of a light beam. In such a case, the glossiness of the interlayer film for laminated glass of the present invention is preferably the minimum glossiness obtained by setting the first resin layer on a sample table and measuring the glossiness while rotating the first resin layer on the sample plate to the irradiation direction of a light source.

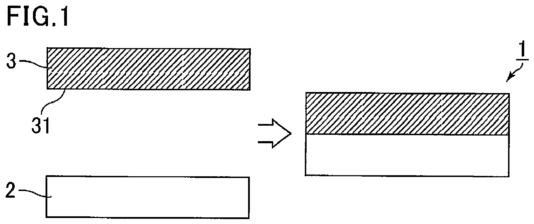

Fig. 1 is a schematic view for showing the surface of the first resin layer on the side to be in contact with the plastic layer. An interlayer film for laminated glass 1 in Fig. 1 has a double layer structure including a plastic layer 2 and a first resin layer 3. In the present invention, the glossiness of a surface 31 of the first resin layer 3 on the side to be in contact with the plastic layer 2 is controlled.

As for the ten-point average roughness Rz measured in conformity with JIS B0601-1982 of the surface of the first resin layer on the side to be in contact with the plastic layer, the lower limit is preferably 5 µm and the upper limit is preferably 55 µm. When the ten-point average roughness Rz is within the above range, the first resin layer can exhibit higher adhesiveness to the plastic layer and blocking can be further prevented. The lower limit of the ten-point average roughness Rz is more preferably 10 um, still more preferably 15 µm, and the upper limit thereof is more preferably 50 um, still more preferably 35 µm.

The first resin layer preferably has a pitch of roughness measured in conformity with JIS B0601-1982 of 80 um or more on the surface on the side to be in contact with the plastic layer. When the pitch of roughness is 80 um or more, the first resin layer can exhibit higher adhesiveness to the plastic layer and blocking can be further prevented. The pitch of roughness is more preferably 100 µm or more, still more preferably 150 µm or more.

The first resin layer contains polyvinyl acetal.

The polyvinyl acetal can be produced by acetalization of polyvinyl alcohol (PVA) with an aldehyde. The degree of saponification of the PVA is commonly within a range of 70 to 99.9 mol%.

The degree of polymerization of the PVA for obtaining the polyvinyl acetal is preferably 200 or more, more preferably 500 or more, still more preferably 1700 or more, particularly preferably 2000 or more, and preferably 5000 or less, more preferably 4000 or less, still more preferably 3000 or less, furthermore preferably less than 3000, particularly preferably 2800 or less. The polyvinyl acetal is preferably obtained by acetalization of PVA having a degree of polymerization satisfying the above upper limit and lower limit. When the degree of polymerization is equal to or more than the lower limit, a laminated glass to be obtained has higher penetration resistance. When the degree of polymerization is equal to or less than the upper limit, formation of an interlayer film is facilitated.

The degree of polymerization of PVA refers to the average degree of polymerization. The average degree of polymerization can be determined by the method in conformity with JIS K6726 "Testing methods for polyvinyl alcohol". Commonly, the aldehyde used is preferably a C1-C10 aldehyde. Examples of the C1-C10 aldehyde include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decyl aldehyde, and benzaldehyde. Among these, n-butyraldehyde, n-hexylaldehyde, or n-valeraldehyde is preferably used, and n-butyraldehyde is more preferably used. The aldehydes may be used alone, or in combination of two or more thereof.

The polyvinyl acetal is preferably polyvinyl butyral. The use of polyvinyl butyral further improves the weather resistance properties of the interlayer film relative to a laminated glass member.

The first resin layer contains a plasticizer.

Any plasticizer may be used as long as it is commonly used in interlayer films for laminated glass. Examples thereof include organic plasticizers such as monobasic organic acid esters and polybasic organic acid esters, and phosphoric acid plasticizers such as organophosphate compounds and organophosphite compounds.

Examples of the organic plasticizers include triethylene glycol-di-2-ethylhexanoate, triethylene glycol-di-2-ethylbutyrate, triethylene glycol-di-n-heptanoate, tetraethylene glycol-di-2-ethylhexanoate, tetraethylene glycol-di-2-ethylbutyrate, tetraethylene glycol-di-n-heptanoate, diethylene glycol-di-2-ethylhexanoate, diethylene glycol-di-2-ethylbutyrate, and diethylene glycol-di-n-heptanoate. Among these, the first resin layer contains preferably triethylene glycol-di-2-ethylhexanoate, triethylene glycol-di-2-ethylbutyrate, or triethylene glycol-di-n-heptanoate, more preferably triethylene glycol-di-2-ethylhexanoate.

The amount of the plasticizer relative to the amount of the thermoplastic resin in the first resin layer is not particularly limited. The amount of the plasticizer based on 100 parts by mass of the thermoplastic resin is preferably 25 parts by mass or more, more preferably 30 parts by mass or more, still more preferably 35 parts by mass or more, and preferably 80 parts by mass or less, more preferably 60 parts by mass or less, still more preferably 50 parts by mass or less. When the amount of the plasticizer is equal to or more than the lower limit, a laminated glass to be obtained has better penetration resistance. When the amount of the plasticizer is equal to or less than the upper limit, an interlayer film to be obtained has higher transparency.

The first resin layer preferably contains an adhesion modifier.

As the adhesion modifier, for example, an alkali metal salt or an alkaline earth metal salt is preferably used. Examples of the adhesion modifier include salts such as potassium, sodium, and magnesium salts.

Examples of an acid forming the salts include organic carboxylic acids such as octylic acid, hexylic acid, 2-ethylbutyric acid, butyric acid, acetic acid, and formic acid , and inorganic acids such as hydrochloric acid and nitric acid.

The first resin layer may optionally contain additives such as an ultraviolet shielding agent, an antioxidant, a light stabilizer, a modified silicon oil as an adhesion modifier, a flame retardant, an antistatic agent, a damp proofing agent, a heat ray reflecting agent, a heat ray absorbing agent, an anti-blocking agent, an antistatic agent, and a colorant including pigment or dyes.

As for the thickness of the first resin layer, the lower limit is preferably 100 µm and the upper limit is preferably 2 mm. When the thickness of the first resin layer is within the range, excellent impact resistance and penetration resistance can be achieved. The lower limit of the thickness of the first resin layer is more preferably 200 µm, and the upper limit thereof is more preferably 1 mm.

In the interlayer film for laminated glass of the present invention, a second resin layer may be further stacked on a second surface, which is the opposite surface of the first surface, of the plastic layer.

The second resin layer may be a layer same as or different from the first resin layer. In the case where the first resin layer and the second resin layer have different characteristics, the resulting interlayer film for laminated glass can have various properties which are hardly achieved by a single layer structure.

In the case where the interlayer film for laminated glass of the present invention has a second resin layer, the glossiness of the second resin layer is preferably 10 to 40 on a surface on the side to be in contact with the plastic layer.

The interlayer film for laminated glass of the present invention may be produced by any method. The interlayer film for laminated glass may be produced by separately preparing the plastic layer and the first resin layer and then laminating the layers to each other or by co-extruding resin compositions as raw materials of the layers from a co-extruder. When a lip die that can provide projections and recesses is used in the extrusion molding of the resin composition from an extruder for forming a first resin layer and extrusion molding conditions are controlled, the glossiness of the surface on the side to be in contact with the plastic layer can be set to 10 to 40.

Specifically, the glossiness of the surface of the resulting resin film can be adjusted to a predetermined range by using a lip die having lips with a wide interval, setting the temperature of the resin composition high upon extrusion, setting the line speed high.

Also, it is also effective to keep a long distance between the die and a cooling water tank.

More specifically, the glossiness of the surface on the side to be in contact with the plastic layer can be set to 10 to 40 by using a lip die having lips with an interval of 0.5 to 4.0 mm, setting the temperature of the resin composition at the inlet of the die to 100°C to 300°C and the temperature of the lip die to 100°C to 300°C, and performing the extrusion at a line speed of 3 to 35 m/min.

The present invention also encompasses a laminated glass including a pair of glass plates and the interlayer film for laminated glass of the present invention sandwiched between the pair of glass plates.

The glass plates may be common transparent glass plates. Examples thereof include plates of inorganic glass such as float glass plates, polished glass plates, figured glass plates, meshed glass plates, wired glass plates, colored glass plates, heat-absorbing glass plates, heat-reflecting glass plates, and green glass plates. An ultraviolet shielding glass plate including an ultraviolet shielding coat layer on a glass surface may also be used. Other examples of the glass plates include organic plastic plates made of polyethylene terephthalate, polycarbonate, polyacrylate.

The glass plates may include two or more types of glass plates. For example, the laminated glass may be a laminate including the interlayer film for laminated glass of the present invention between a transparent float glass plate and a colored glass plate such as a green glass plate. The glass plates may include two or more glass plates with different thicknesses.

### - Advantageous Effects of Invention

The present invention can provide interlayer film for laminated glass which has a laminated structure including a plastic layer with a high Young's modulus and a resin layer, which is excellent in impact resistance and penetration resistance, which has high adhesiveness between the plastic layer and the resin layer, and which prevents blocking of the resin layer. The present invention can also provide a laminated glass including the interlayer film for laminated glass.

### BRIEF DESCRIPTION OF DRAWINGS

Fig. 1 is a schematic view for showing a surface of a first resin layer on the side to be in contact with a plastic layer.

### DESCRIPTION OF EMBODIMENTS

The present invention is specifically described in the following with reference to, but not limited to, examples.

### (Example 1)

### (1) Plastic layer

A polyethylene terephthalate film ("U34 LUMIRROR" produced by TORAY Industries, Inc., Young's modulus: 4.5 GPa, thickness: 100 µm) was used as a plastic layer.

### (2) Preparation of first resin layer

To 100 parts by mass of polyvinyl butyral (hydroxy group content: 30 mol%, degree of acetylation: 1 mol%, degree of butyralization: 69 mol%, average degree of polymerization: 1700) were added 40 parts by mass of triethylene glycol-di-2-ethylhexanoate (3GO) as a plasticizer, 0.5 parts by mass of 2-(2'-hydroxy-3'-t-butyl-5-methylphenyl)-5-chlorobenzotriaz ole ("Tinuvin326" produced by Basf SE) as an ultraviolet shielding agent, and 0.5 parts by mass of 2,6-di-t-butyl-p-cresol (BHT) as an antioxidant, and sufficiently kneaded with a mixing roll to give a resin composition.

The resulting resin composition was extruded from an extruder to give a single-layer first resin layer having a thickness of 380 µm. For the extrusion, a lip die having lips with an interval of 1.0 mm was used, the temperature of the resin composition at the inlet of the die and the temperature of the lip die were adjusted to 200°C and 210°C, respectively, and the line speed was set to 10 m/min. The obtained first resin layer was wound to give a roll.

### (3) Production of interlayer film for laminated glass

The obtained first resin layer and plastic layer were thermally press-bonded by a roll-to-roll method using a thermal press-bonding laminator ("MRK-650Y type" produced by MCK Co., Ltd.) under the conditions of a heating temperature of 90°C, a pressure for the press-bonding of 1 kN, and a tension upon delivery of 100 N, thereby producing an interlayer film for laminated glass having a double layer structure.

### (Examples 2 to 7, Comparative Examples 1 to 4)

The interlayer film for laminated glass and a roll were produced in the same manner as in Example 1, except that the interval of lips, the temperature of the resin composition at the inlet of the die, the temperature of the lip die, and the line speed in the production of the first resin layer were changed.

### (Evaluation)

The first resin layers and interlayer films for laminated glass obtained in the examples and comparative examples were evaluated by the following methods.

Table 1 shows the results.

### (1) Measurement performed on the surface of the first resin layer

The glossiness of the surface of each obtained first resin layer on the side to be in contact with the plastic layer was measured using a precision gloss meter ("GM-26PRO" produced by Murakami Color Research Laboratory) in conformity with the measuring method 2 disclosed in JIS Z 8741:1997. In the measurement, the minimum glossiness obtained by setting the first resin layer on a sample table and measuring the glossiness while rotating the first resin layer on the sample table to the irradiation direction of a light source was determined as the glossiness of the surface of the first resin layer on the side to be in contact with the plastic layer.

Further, the ten-point average roughness Rz and the pitch of roughness of the surface of the first resin layer on the side to be in contact with the plastic layer were measured by a method in conformity with JIS B0601-1982.

### (2) Evaluation of blocking

The roll (500 m) of each obtained first resin layer was set on a rewinder, and the force required for rewinding the first resin layer was measured using a tension detector (LX-050TD produced by Mitsubishi Electric Corporation) . Commonly, when the maximum value of the force required for rewinding the first resin layer is 350 N/m or less, it is determined that blocking does not occur. The case where the force required for rewinding the first resin layer from the roll was 200 N/m or less was rated "Excellent (oo)", the case where the force was more than 200 N/m but not more than 350 N/m was rated "Good (o) ", and the case where the force was more than 350 N/m was rated "Poor (x)".

### (3) Adhesive force between plastic layer and resin layer

The adhesive force between the plastic layer and the first resin layer was measured using a TENSILON universal testing machine ("RTM-500" produced by Orientec Co., LTD.) at 23°C at a rate of 500 mm/min in conformity with JIS K6854-2.

Commonly, when the adhesive force between the plastic layer and the resin layer is 3 N/5 cm or higher, it is considered that a problem of peeling does not occur. The case where the adhesive force between the plastic layer and the resin layer was 8 N/5 cm or higher was rated "Excellent (ooo) ". The case where the adhesive force was lower than 8 N/5 cm but not lower than 5 N/5 cm was rated "Very Good (oo) ". The case where the adhesive force was lower than 5 N/5 cm but not lower than 3 N/5 cm was rated "Good (∘)". The case where the adhesive force was lower than 3 N/5 cm was rated "Poor (x)".

**[Table 1]**

| | Surface of the first resin layer on the side to be in contact with the plastic layer | | | Evaluation | |
|---|---|---|---|---|---|
| | Glossiness | Ten point average roughness Rz ( *µ* m) | Pitch of roughness ( *µ* m) | Blocking | Adhesiveness |
| Example 1 | 10 | 23 | 100 | ○ | ○○ |
| Example 2 | 22 | 5 | 85 | ○ | ○○ |
| Example 3 | 12 | 54 | 150 | ○○ | ○ |
| Example 4 | 30 | 19 | 650 | ○○ | ○ |
| Example 5 | 40 | 15 | 430 | ○ | ○○○ |
| Example 6 | 14 | 41 | 130 | ○ | ○ |
| Example 7 | 20 | 35 | 250 | ○ | ○ |
| Comparative Example 1 | 5 | 20 | 92 | ○○ | × |
| Comparative Example 2 | 45 | 5 | 310 | × | ○○ |
| Comparative Example 3 | 5 | 55 | 810 | ○○ | × |
| Comparative Example 4 | 52 | 48 | 730 | × | ○○ |

### INDUSTRIAL APPLICABILITY

The present invention can provide an interlayer film for laminated glass which has a laminated structure including a plastic layer with a high Young's modulus and a resin layer, which is excellent in impact resistance and penetration resistance, which has high adhesiveness between the plastic layer and the resin layer, and which prevents blocking of the resin layer. The present invention also can provide a laminated glass including the interlayer film for laminated glass.

### REFERENCE SIGNS LIST

1: Interlayer film for laminated glass
2: Plastic layer
3: First resin layer
31: Surface of the first resin layer 3 on the side to be in contact with the plastic layer 2

## Claims

1. An interlayer film for laminated glass (1), having a multilayer structure including:
a plastic layer (2) containing polyethylene terephthalate and with a Young's modulus of 1 GPa or more as the value indicated by the slope of the straight line part of a stress-strain curve that is drawn in a tensile test in conformity with JIS K7127 at 23°C; and
a first resin layer (3) containing polyvinyl acetal and a plasticizer on a first surface of the plastic layer,
**characterized in that**
the first resin layer (3) having a glossiness of 10 to 40, which is the 75° specular glossiness measured in conformity with JIS Z 8741:1997, on the surface on the side to be in contact with the plastic layer.

2. The interlayer film for laminated glass (1) according to claim 1,
wherein the glossiness is at least 15.

3. The interlayer film for laminated glass (1) according to claim 1 or 2,
wherein the first resin layer (3) has a ten-point average roughness Rz determined in conformity with JIS B0601-1982 of 5 to 55 µm on the surface on the side to be in contact with the plastic layer.

4. The interlayer film for laminated glass (1) according to claim 1, 2, or 3,
wherein the first resin layer (3) has a pitch of roughness measured in conformity with JIS B0601-1982 of 80 µm or more on the surface on the side to be in contact with the plastic layer.

5. The interlayer film for laminated glass (1) according to claim 1, 2, 3, or 4,
wherein the plasticizer is selected from triethylene glycol-di-2-ethylhexanoate, triethylene glycol-di-2-ethylbutyrate, and triethylene glycol-di-n-heptanoate.

6. A laminated glass comprising
a pair of glass plates and
the interlayer film for laminated glass (1) according to claim 1, 2, 3, 4, or 5 positioned between the pair of glass plates.

## Patentansprüche

1. Zwischenschichtfolie für Verbundglas (1), die eine mehrschichtige Struktur aufweist, die beinhaltet:
eine Kunststoffschicht (2), die Polyethylenterephthalat enthält, und mit einem Young'schen Modul von 1 GPa oder mehr als dem Wert, der durch den Anstieg des geraden Linienteils einer Spannungs-Dehnungs-Kurve angezeigt wird, der in einem Zugfestigkeitstest in Übereinstimmung mit JIS K7127 bei 23°C gezogen wird, und
eine erste Harzschicht (3), die Polyvinylacetal und einen Weichmacher auf einer ersten Oberfläche der Kunststoffschicht enthält,
**dadurch gekennzeichnet, dass**
die erste Harzschicht (3) einen Glanzgrad von 10 bis 40 aufweist, welcher der 75° Spiegelglanz, gemessen in Übereinstimmung mit JIS Z 8741:1997, auf der Oberfläche auf der Seite ist, die mit der Kunststoffschicht in Kontakt stehen soll.

2. Zwischenschichtfolie für Verbundglas (1) nach Anspruch 1,
wobei der Glanzgrad mindestens 15 beträgt.

3. Zwischenschichtfolie für Verbundglas (1) nach Anspruch 1 oder 2,
wobei die erste Harzschicht (3) eine Zehn-Punkt-Durchschnitts-Rauheit Rz, bestimmt in Übereinstimmung mit JIS B0601-1982 von 5 bis 55 µm auf der Oberfläche auf der Seite aufweist, die mit der Kunststoffschicht in Kontakt stehen soll.

4. Zwischenschichtfolie für Verbundglas (1) nach Anspruch 1, 2 oder 3,
wobei die erste Harzschicht (3) eine Rauheitshöhe, gemessen in Übereinstimmung mit JIS B0601-1982 von 80 µm oder mehr auf der Oberfläche auf der Seite aufweist, die mit der Kunststoffschicht in Kontakt stehen soll.

5. Zwischenschichtfolie für Verbundglas (1) nach Anspruch 1, 2, 3 oder 4,
wobei der Weichmacher aus Triethylen-glycol-di-2-ethylhexanoat, Triethylen-glycol-di-2-ethylbutyrat und Triethylen-glycol-di-n-heptanoat ausgewählt ist,

6. Verbundglas, umfassend:
ein Paar von Glasplatten und
die Zwischenschichtfolie für Verbundglas (1) nach Anspruch 1, 2, 3, 4 oder 5, die zwischen dem Paar von Glasplatten positioniert ist.

## Revendications

1. Film intercalaire pour verre feuilleté (1), ayant une structure multicouche contenant :
une couche de plastique (2) contenant du poly(téréphtalate d'éthylène) et ayant un module de Young, en tant que valeur indiquée par la pente de la partie en ligne droite d'une courbe de contrainte-déformation qui est tracée dans un test de traction conformément à la norme JIS K7127 à 23 °C, de 1 GPa ou plus ; et
une première couche de résine (3) contenant du poly(acétal de vinyle) et un plastifiant sur une première surface de la couche plastique,
**caractérisé en ce que**
la première couche de résine (3) a un brillant de 10 à 40, qui est le brillant spéculaire à 75° mesuré conformément à la norme JIS Z 8741:1997, sur la surface du côté devant être en contact avec la couche de plastique.

2. Film intercalaire pour verre feuilleté (1) selon la revendication 1,
dans lequel le brillant est d'au moins 15.

3. Film intercalaire pour verre feuilleté (1) selon la revendication 1 ou 2,
dans lequel la première couche de résine (3) a une rugosité moyenne sur dix points Rz, déterminée conformément à la norme JIS B0601-1982, de 5 à 55 µm sur la surface du côté devant être en contact avec la couche de plastique.

4. Film intercalaire pour verre feuilleté (1) selon la revendication 1, 2 ou 3,
dans lequel la première couche de résine (3) a un pas de rugosité, mesuré conformément à la norme JIS B0601-1982, de 80 µm ou plus sur la surface du côté devant être contact avec la couche de plastique.

5. Film intercalaire pour verre feuilleté (1) selon la revendication 1, 2, 3 ou 4,
dans lequel le plastifiant est choisi parmi le di-2-éthylhexanoate de triéthylèneglycol, le di-2-éthylbutyrate de triéthylèneglycol, et le di-n-heptanoate de triéthylèneglycol.

6. Verre feuilleté comprenant
une paire de plaques de verre et
le film intercalaire pour verre feuilleté (1) selon la revendication 1, 2, 3, 4 ou 5 positionné entre la paire de plaques de verre.
